# EUROPÄISCHE PATENTANMELDUNG

(11) **EP 1 533 027 A2**
(43) Veröffentlichungstag der Anmeldung: **25.05.2005**
(21) Anmeldenummer: 04026419.4
(22) Anmeldetag: 08.11.2004
(51) Int. Cl.: B01J 21/04, B01J 21/06, B01J 37/03, B01J 37/10, B01D 53/94, B01J 35/10, B01J 23/10, B01J 23/14, B01J 23/30, B01J 23/34, B01J 23/74

(54) **Verfahren zur Herstellung eines hochtemperaturstabilen, TiO2-haltigen Katalysators oder Katalysatorträgers**

(30) Priorität: 12.11.2003 DE 10352816
(71) Anmelder: Sachtleben Chemie GmbH, 47198 Duisburg (DE)
(72) Erfinder: Gesenhues, Ulrich, Dr., 47441 Moers (DE); Weyand, Sonja, 47059 Duisburg (DE)
(74) Vertreter: Uppena, Franz, Dr.

(57) **Zusammenfassung**

Beschrieben wird ein Verfahren zur Herstellung eines hochtemperaturstabilen TiO₂-haltigen Katalysators oder Katalysatorträgers. Dabei wird
eine wässrige, Ti-haltige Lösung mit einer Konzentration an gelöstem Ti von umgerechnet 10 bis 250 g TiO₂ pro Liter Lösung zu einer maximal 10 Gew.-%igen Suspension eines feindispersen, anorganisches Trägermaterials in Wasser gegeben,
wobei das anorganische Trägermaterial eine spezifische Oberfläche nach BET von > 20 m²/g hat und eventuell vorhandene Agglomerate aus den Primärteilchen eine Teilchengröße d₅₀ < 10 µm, bevorzugt < 5 µm, aufweisen,
wobei die Zugabegeschwindigkeit der Ti-haltigen Lösung zur Suspension so gewählt wird, dass eine Zugabe von umgerechnet 0,05 g TiO₂ pro m² Trägeroberfläche und Stunde nicht überschritten wird,
das TiO₂ auf den anorganischen Träger aufgefällt, und das erhaltene Produkt filtriert, gewaschen und geglüht wird.

Alternativ können die hochtemperaturstabilen TiO₂-haltigen Katalysatoren oder Katalysatorträger hergestellt werden durch ein Verfahren, bei dem aus wässriger Lösung 1. hydratisierte Vorformen eines oder mehrerer Metalloxide oder Halbmetalloxide, und 2. Titanoxidhydrat schnell ausgefällt werden.

## Beschreibung

Die Erfindung betrifft ein Verfahren zur Herstellung eines hochtemperaturstabilen TiO₂-haltigen Katalysators oder Katalysatorträgers und seine Anwendung.

Mit Hilfe von Abgaskatalysatoren werden gasförmige Schadstoffe, die bei Verbrennungsprozessen, z.B. in Automobilen oder Kraftwerken, entstehen können, wie z.B. Kohlenwasserstoffe, Kohlenmonoxid (CO) und Stickoxide (NOₓ), unschädlich gemacht. Viele solcher Katalysatoren enthalten TiO₂, wobei das TiO₂ als Katalysator selbst oder im Zusammenspiel mit Übergangsmetalloxiden oder Edelmetallen als Co-Katalysator wirkt.

Die Herstellung solcher Katalysatoren ist z.B. beschrieben in der DE 2458888 A1. Von Nachteil dieser Katalysatoren ist die nur bis 650 °C reichende Temperaturbeständigkeit. Ein in der US 5922294 beschriebener Katalysator, bei dem TiO₂ in der (nach derzeitigem Fachurteil einzig) aktiven und daher gewünschten Anatasmodifikation vorliegt, ist zwar bis 800 °C stabil; allerdings hat das Herstellverfahren der Co-Hydrolyse von Titan- und Aluminium-Alkoxiden (Sol-Gel-Verfahren) den Nachteil, dass mit nicht gewünschten, weil relativ teuren, metallorganischen Verbindungen und organischen Lösungsmitteln gearbeitet werden muss. Ähnlich verhält es sich bei dem in der EP 0826410 beschriebenen Verfahren für das System TiO₂/SiO₂.

Aufgabe der Erfindung ist es, die Nachteile des Standes der Technik zu überwinden und insbesondere ein Verfahren zur Herstellung eines TiO₂-haltigen Katalysators oder Katalysatorträgers aufzuzeigen, das zu Katalysatoren oder Katalysatorträgern mit TiO₂ in der Anatasform oder einer Anatas-Rutil-Mischform führt, wobei das Katalysatormaterial eine hohe Oberfläche aufweist und hochtemperaturstabil ist. Hochtemperaturstabil bedeutet hier, dass die spezifische Oberfläche sowie das ursprüngliche Verhältnis von Anatas- zu Rutilmodifikation im TiO₂-Anteil des Katalysatormaterials auch bei höheren Temperaturen erhalten bleibt. Weiterhin soll das Verfahren den Einsatz metallorganischer Verbindungen und organischer Lösungsmittel vermeiden und wirtschaftlich, das heißt mit hoher Raum-Zeit-Ausbeute, durchgeführt werden können.

Die Aufgabe wird durch ein Verfahren zur Herstellung eines hochtemperaturstabilen TiO₂-haltigen Katalysators oder Katalysatorträgers gelöst. Dabei wird eine wässrige, Titan-haltige Lösung mit einer Konzentration an gelöstem Ti von umgerechnet 10 bis 250 g TiO₂ pro Liter Lösung zu einer maximal 10 Gew.-%-igen Suspension eines feindispersen, anorganischen Trägermaterials in Wasser gegeben, wobei TiO₂ als Titanoxidhydrat auf den anorganischen Träger aufgefällt wird. Feindispers bedeutet hier, dass das anorganische Trägermaterial eine spezifische Oberfläche nach BET (DIN 66131 und 66132) von > 20 m²/g hat und die Primärteilchen entweder nicht agglomeriert sind oder eventuell vorhandene Agglomerate aus den Primärteilchen eine Teilchengröße d₅₀ < 10 µm, bevorzugt < 5 µm, aufweisen (gemessen mit Laserbeugung). Die Zugabegeschwindigkeit der Ti-haltigen Lösung zur Suspension ist dabei so zu wählen, dass eine Zugabe von umgerechnet 0,05 g TiO₂ pro m² Trägeroberfläche und Stunde nicht überschritten wird. Anschließend wird das mit TiO₂ versehene Trägermaterial filtriert, gewaschen und geglüht.

Je nach eingesetztem Trägermaterial kann dieses anstatt in Wasser auch in verdünnten oder konzentrierten Säuren oder Laugen suspendiert werden. Durch die Wahlmöglichkeit des pH-Wertes steht für die Bedingungen der anschließenden Auffällung von TiO₂ eine weitere Variationsmöglichkeit zur Verfügung. Z.B. kann bei einem Trägermaterial aus SiO₂ ein beliebiger pH-Wert unter 9 gewählt werden, bei Al₂O₃ ein beliebiger pH-Wert zwischen 4 und 9. Als (anorganische oder organische) Säuren oder Laugen können z.B. HCl, HNO₃, H₂SO₄, Essigsäure, Oxalsäure, Zitronensäure sowie NaOH, KOH oder wässrige NH₃-Lösung eingesetzt werden. Dies kann z.B. vorteilhaft sein, um den Grad der Bedeckung der Trägerteilchen mit TiO₂, die Rauhigkeit der TiO₂-Schicht, die Aggregation der beschichteten Teilchen und die Porosität der Aggregate zu beeinflussen.

Alternativ zur Glühung kann das mit TiO₂ (vorliegend als Titanoxidhydrat) versehene Trägermaterial nach der Filtration und Waschung zusammen mit Wasser in einen Druckbehälter (Autoklav) gegeben werden und über einen Zeitraum von einer Stunde bis mehreren (z.B. 5) Tagen bei Temperaturen > 100 °C gehalten werden. Dieser Verfahrensschritt wird als Hydrothermalbehandlung bezeichnet (vgl. auch Ullmanns Enzyklopädie der Technischen Chemie, 4. Auflage, 1978, Band 15, S.117 ff: K.Recker, Einkristallzüchtung). Ein bevorzugter Zeitraum für die Hydrothermalbehandlung des mit TiO₂ (vorliegend als Titanoxidhydrat) versehenen Trägermaterials ist 2 bis 24 Stunden, besonders bevorzugt 4 bis 8 Stunden. Anschließend kann der Katalysator in bekannter Weise getrocknet werden. Es ist auch möglich, die Hydrothermalbehandlung vor der Filtration und Waschung durchzuführen. Dies kann je nach Filtrationseigenschaften und Gehalt an löslichen Restsalzen von wirtschaftlichem Vorteil sein.

Überraschend wurde gefunden, dass ein auf diese Weise hergestellter Katalysator, bzw. Katalysatorträger eine ausreichend hohe spezifische Oberfläche hat und TiO₂ in Anatasform oder in einem festen Verhältnis von Anatas und Rutil enthält, wobei die spezifische Oberfläche und die Anatasform bzw. das Verhältnis von Anatas zu Rutil bis mindestens 800 °C stabil ist.

Bevorzugt wird als wässrige, Ti-haltige Lösung eine mit Schwefelsäure stabilisierte Titanylsulfatösung oder Titansulfatlösung eingesetzt.

Bevorzugt beträgt die Konzentration der Ti-haltigen Lösung an gelöstem Ti umgerechnet 10 bis 200 g TiO₂ pro Liter Lösung, besonders bevorzugt 50 bis 180 g. Die Konzentration der Suspension des feindispersen Trägermaterials beträgt bevorzugt 0,2 bis 8 Gew.-%, besonders bevorzugt 0,5 bis 5 Gew.-% und ganz besonders bevorzugt 1 bis 5 Gew.-%. Dabei erhöhen höhere Konzentrationen die Wirtschaftlichkeit des Verfahrens, führen aber zu einer tendenziell niedrigeren Produktqualität und umgekehrt.

Bevorzugt kann das feindisperse Trägermaterial einen oder mehrere der folgenden Stoffe enthalten oder aus diesem bestehen: MgO, ZnO, Al₂O₃ rein und dotiert, SiO₂, natürliche und künstlich hergestellte Silikate, Alumosilikate, Zeolithe, SnO₂, CeO₂ rein und dotiert, ZrO₂ rein und dotiert, Fe₂O₃, NiO, CuO.

Alternativ wird die Aufgabe gelöst durch ein Verfahren zur Herstellung eines hochtemperaturstabilen TiO₂-haltigen Katalysators oder Katalysatorträgers, bei dem aus wässriger Lösung 1. hydratisierte Vorformen eines oder mehrerer Metalloxide oder Halbmetalloxide, und 2. Titanoxidhydrat schnell ausgefällt werden.

Unter hydratisierten Vorformen sind hier diejenigen Verbindungen zu verstehen, die sich formal durch Addition von ein oder mehreren Formeleinheiten H₂O zur Formeleinheit des Metalloxids bzw. Halbmetalloxids ergeben. Die hydratisierten Vorformen können dabei auch nichtstöchiometrisch sein, z.B. entspricht Metatitansäure nur näherungsweise der Formel TiO(OH)₂ (vgl. U.Gesenhues, Chem. Eng. Technol. 24 (2001) 685). Aus den hydratisierten Vorformen entsteht durch Glühung oder Hydrothermalbehandlung unter Wasserabspaltung das entsprechende Oxid.

Unter "schnell ausgefällt" ist hier zu verstehen, dass pro Liter Suspension und Stunde mindestens 30 g Feststoff, gerechnet als Oxid (ohne Hydratwasser), ausgefällt werden. Dabei wird die Reifezeit nach der Ausfällung nicht mitgerechnet. Anschließend wird das erhaltene Fällungsgemisch filtriert, gewaschen und geglüht, bzw. einer Hydrothermalbehandlung unterzogen.

Zur Fällung können Lösungen der Salze der Metalle, bzw. der Halbmetalle und von Ti gleichzeitig oder nacheinander in einem Rührbehälter zusammengegeben werden. Dabei wird der pH-Wert durch gleichzeitige weitere Zugabe von Säure oder Lauge in solchen Bereichen gehalten, die eine Ausfällung gewährleisten. In der Regel wird mit einem pH-Wert von maximal 12 gearbeitet, z.B. muss der pH-Wert bei der Ausfällung von Kieselsäure unter 9, bei Titanoxidhydrat über 2 und bei Al(OH)₃ zwischen 5 und 8 liegen. Es können auch Lösungen der Salze der Metalle, bzw. der Halbmetalle und von Ti vorgelegt werden und dann auf einen jeweils geeigneten pH-Wert eingestellt werden.

Für die Feinteiligkeit des Niederschlages und für die Vermischung der beiden Komponenten im Endprodukt sind - wie bei jeder Fällungsreaktion - die Konzentrationen der Edukte, ihre Zugabegeschwindigkeit, Rührung und Vermischung, der pH-Wert, die Temperatur und gegebenenfalls die Durchführung der Fällung mit separater Keimbildungsphase von Bedeutung.

Von Vorteil der erfindungsgemäß hergestellten Katalysatoren und Katalysatorträger ist ihre Hochtemperaturstabilität: Auch nach 24-stündigem Glühen bei 800 °C (bzw. 900 °C) sinkt die spezifische Oberfläche maximal um 10 m²/g (nicht unter 30 m²/g), sinkt die Porosität in der Regel nicht unter einen Minimalwert von 0,2 cm³/g und verringert sich der Anatasanteil im TiO₂ um maximal 10 %-Punkte. Bevorzugt weisen die erfindungsgemäß hergestellten Katalysatoren und Katalysatorträger nach 24-stündigem Glühen bei 800 °C eine spezifische Oberfläche von mindestens 40 m²/g, eine Porosität von mindestens 0,2 cm³/g und einen Anatasanteil im TiO₂ von mindestens 90 % auf. Es können aber auch definierte, niedrigere Anatasanteile eingestellt werden, wobei der jeweils eingestellte Anatasanteil bei 800 °C temperaturstabil ist, bzw. sich nach 24-stündigem Glühen bei 800 °C um maximal 10 %-Punkte ändert. Die Einstellung des Anatasgehaltes kann bei der Herstellung der Vorformen von Metalloxid, bzw. Halbmetalloxid und von TiO₂ erfolgen durch den Ablauf der Fällung (Fällung zuerst des Trägers und dann des TiO₂ führt tendenziell zu einem höheren Rutilgehalt, gleichzeitige Fällung des Trägers und des TiO₂ führt tendenziell zu einem höheren Anatasgehalt) oder durch die Wahl einer entsprechend über 800 °C liegenden Glühtemperatur (tendenziell höherer Rutilgehalt) oder gegebenenfalls durch Dotierung z.B. mit SnO₂ (tendenziell höherer Rutilgehalt).

Die erfindungsgemäß hergestellten Katalysatoren können mit Metalloxiden dotiert werden, z.B. mit SnO₂, CeO₂, VOₓ, CrOₓ, MoOₓ, WOₓ, MnOₓ, FeOₓ und NiO. Dazu können die bekannten Verfahren benutzt werden, also bei der 1. Verfahrensvariante (Auffällung von TiO₂ auf einen vorgefertigten, feindispersen, anorganischen Träger)
- die Zugabe von wässrigen Lösungen der Salze der Dotiermetalle (A) oder von Suspensionen der hydratisierten Vorformen der Oxide der Dotiermetalle (B) zu der Ti-haltigen Lösung oder zu der Suspension des feindispersen, anorganischen Trägermaterials vor, während oder nach der Fällung,
- die Imprägnierung des gewaschenen Filterkuchens mit A oder das Kneten des Filterkuchens mit B,
- die Imprägnierung des Glühproduktes oder des hydrothermal behandelten Produktes mit A oder das Kneten beider Produkte mit B, gefolgt von erneuter Trocknung und Glühung bzw. Hydrothermalbehandlung,
oder bei der 2. Verfahrensvariante (Fällung einer Mischung aus hydratisierten Vorformen eines oder mehrerer Metalloxide oder Halbmetalloxide und Titanoxidhydrat)
- die Zugabe von wässrigen Lösungen der Salze der Dotiermetalle (A) oder von Suspensionen der hydratisierten Vorformen der Oxide der Dotiermetalle (B) zu den Lösungen der Metall- oder Halbmetallsalze für das Trägermaterial und der Ti-haltigen Lösung vor der Fällung der hydratisierten Vorformen ihrer Oxide,
- die gleichzeitige Zugabe von A oder B zusammen mit den Lösungen der Metall- oder Halbmetallsalze für das Trägermaterial und der Ti-haltigen Lösung zu der Fällung der hydratisierten Vorformen ihrer Oxide,
- die Zugabe von A oder B zur Suspension der frisch gefällten hydratisierten Vorformen der Oxide der Metalle oder Halbmetalle für das Trägermaterial und von Ti (Zugabe nach der Fällung),
- die Imprägnierung des gewaschenen Filterkuchens der frisch gefällten hydratisierten Vorformen der Oxide der Metalle und Halbmetalle für das Trägermaterial und von Ti mit A oder das Kneten des Filterkuchens mit B (2),
- die Imprägnierung des Glühprodukts oder des hydrothermal behandelten Produkts aus den Oxiden der Metalle und Halbmetalle für das Trägermaterial und von Ti mit A oder das Kneten beider Produkte mit B, gefolgt von erneuter Trocknung und Glühung bzw. Hydrothermalbehandlung.

Die erfindungsgemäß hergestellten dotierten Katalysatoren sind bei noch höheren Temperaturen stabil als die gemäß dem Stand der Technik hergestellten dotierten Katalysatoren oder je nach Dotiermetalloxid auch hochtemperaturstabil an sich (bis 800 °C). Unter dotiert wird hier die Gegenwart geringer Mengen Oxide anderer Metalle, als die das Trägermaterial darstellenden Metall- oder Halbmetalloxide verstanden. Als geringe Mengen werden dabei Gehalte von Dotiermetalloxid von maximal 25 Gew.-%, bevorzugt maximal 10 Gew.-%, bezogen auf das fertige Katalysatormaterial, bzw. Katalysatorträgermaterial, angesehen. Die Verteilung der Dotierkomponente im Katalysatormaterial ist nicht festgelegt: Die Dotierkomponente kann gleichmäßig im Volumen des Katalysatormaterials verteilt, oder an seiner inneren Oberfläche angereichert, oder ausschließlich dort vorhanden sein.

Die erfindungsgemäß hergestellten Katalysatoren und Katalysatorträger finden Verwendung unter anderem in der Abgaskatalyse (z.B. Kraftfahrzeuge, Verbrennungskraftwerke), in chemischen Katalyseverfahren, in der petrochemischen Industrie und in der organischen Grundstoffsynthese.

Die Erfindung wird im folgenden anhand von Beispielen näher erläutert.

### Vergleichsbeispiel A: Herstellung eines Katalysatorpulvers, bestehend aus TiO₂ ohne Träger (Stand der Technik)

Eine nach dem Sulfatverfahren hergestellte, anschließend gewaschene und gebleichte Metatitansäure wurde über Nacht bei 105 °C getrocknet. Das erhaltene pulverförmige Produkt hatte folgende Eigenschaften: 80 Gew.-% TiO₂-Gehalt, 10 Gew.-% anhaftende H₂SO₄, Rest chemisch und in Poren gebundenes Wasser, und das TiO₂ lag zu 100 % in der Anatasform vor (Röntgendiffraktogramm). Die BET-Oberfläche betrug 299 m²/g. Die Kristallitgröße betrug 7 nm (Bestimmung nach Scherrer). Je 10 g des Produkts wurden im Muffelofen 4 Stunden bei 750, 800 und 850 °C geglüht, dann wurden erneut die BET-Oberfläche, das Verhältnis von Anatas und Rutil und die Kristallitgröße bestimmt. Die Ergebnisse sind zusammenfassend in Tabelle 1 dargestellt und zeigen die mangelnde Stabilität der spezifischen Oberfläche gegen Sintern und die mangelnde Stabilität der Anatasmodifikation gegen die Umwandlung in Rutil.

### Vergleichsbeispiel B: Herstellung eines Katalysators durch Aufbringen von TiO₂ auf einen vorgefertigten, agglomerierten Al₂O₃-Träger (Stand der Technik)

In einem 6 I-Rundkolben mit KPG-Rührer, Rückflusskühler, Kontaktthermometer und Heizpilz wurden 2 I H₂O und 100 g eines kommerziellen Aluminiumoxids (theta-Al₂O₃, BET = 99 bis100 m²/g, Agglomeratgröße d₅₀ = 28 µm, Feinkornanteil 20 % < 10 µm (gemessen mit Laserbeugung) unter Rühren vorgelegt. Bei 90 °C wurden gleichmäßig über 180 Minuten 675 ml TiOSO₄-Lösung, welche 44,5 g Ti enthielt (was umgerechnet einem Gehalt von 110 g TiO₂/I entspricht) und mit 225 g H₂SO₄/I stabilisiert war, zugegeben. Dann wurde 30 Minuten gekocht, anschließend filtriert, gewaschen und getrocknet.

Je 10 g des Produkts wurden wie im Vergleichsbeispiel A geglüht und untersucht. Die Ergebnisse in Tabelle 1 zeigen eine noch schlechtere thermische Stabilität der Anatasphase gegenüber der Umwandlung in Rutil als das Vergleichsbeispiel A an.

### Beispiel 1: Herstellung eines Katalysators durch Aufbringen von TiO₂ auf einen vorgefertigten, feindispersen Al₂O₃-Träger

In einem 6 I-Rundkolben mit KPG-Rührer, Rückflusskühler, Kontaktthermometer und Heizpilz wurden 2 I H₂O und 100 g eines kommerziellen Aluminiumoxids (CABOT ALON, pyrogenes und daher nicht agglomeriertes Al₂O₃ der Firma Cabot, BET = 52 bis 55 m²/g, durchschnittliche Teilchengröße 30 nm (gemessen mit Transmissionselektronenmikroskop (TEM)) unter Rühren vorgelegt. Bei 90 °C wurden gleichmäßig über 180 Minuten 675 ml TiOSO₄-Lösung, welche 44,5 g Ti enthielt (was umgerechnet einem Gehalt von 110 g TiO₂/I entspricht) und mit 225 g H₂SO₄/I stabilisiert war, zugegeben. Dann wurde 30 Minuten gekocht, anschließend filtriert, gewaschen und getrocknet.

Je 10 g des Produkts wurden im Muffelofen 4 Stunden bei 750, 800 und 850 °C geglüht und untersucht. Die Ergebnisse in Tab. 1 zeigen wie die von Vergleichsbeispiel B eine ausreichend hohe und temperaturstabile spezifische Oberfläche, aber im Gegensatz zu den Ergebnissen von Vergleichsbeispiel B die Stabilität der Anatasphase gegenüber der Umwandlung in Rutil.

### Beispiel 2: Herstellung eines Katalysators durch Aufbringen von TiO₂ auf einen vorgefertigten, feindispersen SiO₂-Träger

In einem 6 I-Rundkolben mit KPG-Rührer, Rückflusskühler, Kontaktthermometer und Heizpilz wurden 2 I H₂O und 100 g eines kommerziellen Siliziumdioxids (Aerosil OX50 (pyrogene und daher nicht agglomerierte Kieselsäure der Degussa), BET = 45 m²/g, durchschnittliche Teilchengröße 40 nm (gemessen mit TEM)) unter Rühren vorgelegt. Bei 90 °C wurden gleichmäßig über 180 Minuten 675 ml TiOSO₄-Lösung, welche 44,5 g Ti enthielt (was umgerechnet einem Gehalt von 110 g TiO₂/l entspricht) und mit 225 g H₂SO₄/I stabilisiert war, zugegeben. Dann wurde 30 Minuten gekocht, anschließend filtriert, gewaschen und getrocknet.

Je 10 g des Produkts wurden analog Beispiel 1 geglüht und untersucht. Die Ergebnisse in Tab. 1 zeigen auch hier eine temperaturstabile und ausreichend hohe spezifische Oberfläche sowie die Stabilität der Anatasphase gegenüber der Umwandlung in Rutil.

### Beispiel 3: Herstellung eines Katalysators durch Aufbringen von TiO₂ auf einen vorgefertigten, besonders feindispersen SiO₂-Träger

Die Herstellung und Prüfung des Katalysators erfolgte analog Beispiel 2, wobei als Träger ein kommerzielles, besonders feinteiliges Siliziumdioxid (Aerosil 200 (pyrogene und daher nicht agglomerierte Kieselsäure der Degussa), BET = 200 ± 25 m²/g, durchschnittliche Teilchengröße 12 nm (gemessen mit TEM)) eingesetzt wurde. In diesem Fall wurden lediglich 50 g der Kieselsäure eingesetzt, und es wurden 900 ml der bereits in Beispiel 2 verwendeten TiOSO₄-Lösung über 240 Minuten zugetropft. So wurde entsprechend der im Vergleich zu Beispiel 2 größeren spezifischen Oberfläche des Trägers eine genauso gleichmäßige und genauso dicke TiO₂-Schicht erzielt wie in Beispiel 2. Die Ergebnisse sind in Tabelle 1 dargestellt.

Die Beispiele 1 bis 3 zeigen, dass sich mittels des erfindungsgemäßen Verfahrens und unter Verwendung von vorgefertigten, feinteiligen Trägermaterialien TiO₂-haltige Katalysatoren herstellen lassen, die hinsichtlich ihrer spezifischen Oberfläche und hinsichtlich des Anatasanteils des TiO₂ hochtemperaturstabil sind.

### Beispiel 4: Herstellung eines Katalysators über die Fällung einer Mischung aus Vorformen von TiO₂ und Al₂O₃

In einem 74 I-Edelstahlstutzen mit Heizspirale, Rührer und Ablassventil wurden bei Raumtemperatur 5 I Wasser vorgelegt. Dazu wurden während 180 Minuten gleichzeitig 15,495 I NaAlO₂-Lösung mit einem Al-Gehalt von umgerechnet 305 g Al₂O₃/l und 15,700 I TiOSO₄-Lösung mit einem Ti-Gehalt von umgerechnet 110 g TiO₂/l unter Verwendung von Schlauchpumpen zugegeben. Dabei wurde der pH-Wert durch Zugabe von ca. 1 I 50 %-iger H₂SO₄ bei 6 ± 1 gehalten. Die Temperatur stieg durch die Reaktionswärme auf 60 °C an. Anschließend wurde der Ansatz eine Stunde unter Rühren und Heizen bei 80 °C gereift. Danach hatte der Ansatz einen Gehalt an Vorformen, gerechnet als Oxide TiO₂ und Al₂O₃, von 171 g/l.

Danach wurde abgenutscht und mit 13 I warmem Wasser (Temperatur 60 °C) und 13 I warmer (60 °C) (NH₄)₂SO₄-Lösung mit einem Gehalt von 315 g/l gewaschen. Der Filterkuchen wurde 12 Stunden bei 110 °C getrocknet und in einer gedrehten Quarzglasbirne mit Gasabsaugung, die sich in einem Kammerofen befand, 4 Stunden bei 800 °C geglüht. Anschließend wurde das erhaltene Produkt analog der vorherigen Beispiele hinsichtlich spezifischer Oberfläche, Rutilgehalt und Anataskristallitgröße untersucht. Die Ergebnisse sind in Tabelle 1 dargestellt. Das Produkt enthielt 3200 bis 3600 ppm Na.

### Beispiel 5: Herstellung eines Katalysators durch Fällung einer Mischung aus Vorformen von TiO₂ und Al₂O₃

Analog Beispiel 4 wurden in einem 74 I-Edelstahlstutzen mit Heizspirale, Rührer und Ablassventil 15,495 I NaAlO₂-Lösung vorgelegt und durch Zugabe von ca. 9,5 I 50 %-iger H₂SO₄ während 90 Minuten auf einen pH-Wert von 6±1 gebracht. Die Temperatur stieg dabei auf 95 °C. Der Ansatz wurde 1 Stunde unter Rühren und Heizen bei 80 °C gereift. Dann wurden innerhalb von 90 Minuten 15,700 I TiOSO₄-Lösung mit einem Ti-Gehalt von umgerechnet 110 g TiO₂/l über eine Schlauchpumpe zugegeben, wobei der pH-Wert mit ca. 27 I 10 %-iger wässriger NH₃-Lösung gehalten wurde. Es wurde 1 Stunde unter Rühren und Heizen bei 80 °C gereift. Der Ansatz hatte jetzt einen Gehalt an Feststoffen, gerechnet als Oxide, von 96 g/l. Danach wurde abgenutscht und weiter analog Beispiel 4 verfahren. Nach 4-stündigem Glühen bei 800 °C erfolgte ein weiteres 11-stündiges Glühen bei 900 °C und ein nochmaliges 13-stündiges Glühen bei 900 °C Die Ergebnisse sind in Tabelle 1 dargestellt. Das Produkt enthielt 3000 bis 3200 ppm Na.

### Beispiel 6: Herstellung eines Katalysators durch Fällung einer Mischung aus Vorformen von TiO₂ und SiO₂

In einem 74 I-Edelstahlstutzen mit Heizspirale, Rührer und Ablassventil wurden 5 I H₂O vorgelegt. Über einen Zeitraum von 180 Minuten wurden gleichzeitig 13,525 I Na₂SiO₃-Lösung mit einem Si-Gehalt entsprechend 345 g SiO₂/l und 20,655 I TiOSO₄-Lösung mit einem Ti-Gehalt von umgerechnet 110 g TiO₂/I über Schlauchpumpen zugegeben. Dabei wurde der pH-Wert durch Zugabe von ca. 29 I 10 %-iger wässriger NH₃-Lösung bei 5 bis 6 gehalten. Die Temperatur stieg durch die Reaktionswärme auf 40 °C an. Es wurde 1 Stunde unter Rühren und Heizen bei 80 °C gereift. Der Ansatz hatte jetzt einen Gehalt an Feststoffen, gerechnet als Oxide, von 101 g/l. Danach wurde abgenutscht und mit 14 I warmem Wasser und 14 I warmer (NH₄)₂SO₄-Lösung (Konzentration 84 g/l) gewaschen. Der Filterkuchen wurde bei 110 °C getrocknet und analog Beispiel 5 behandelt. Die Ergebnisse sind in Tabelle 1 dargestellt. Das Produkt enthielt 600 bis 700 ppm Na.

### Beispiel 7: Herstellung eines Katalysators durch Fällung einer Mischung aus Vorformen von TiO₂ und SiO₂

Analog Beispiel 6 wurden in einem 74 I-Edelstahlstutzen mit Heizspirale, Rührer und Ablassventil 15 I 90°C heißes Wasser vorgelegt. Über einen Zeitraum von 120 Minuten wurden 13,525 I Na₂SiO₃-Lösung mit einem Si-Gehalt entsprechend 345 g SiO₂/l über eine Schlauchpumpe zugegeben. Dabei wurde der pH-Wert durch Zugabe von ca. 3,5 I 50 %-iger H₂SO₄ bei 7 bis 8 gehalten. Es wurde eine halbe Stunde unter Rühren und Heizen bei 80 °C gereift. Dann wurden innerhalb von 90 Minuten unter Heizen bei 80 °C 20,655 I TiOSO₄-Lösung mit einem Ti-Gehalt von umgerechnet 110 g TiO₂/l über eine Schlauchpumpe zugegeben und 1 Stunde unter Rühren und Heizen bei 80 °C gereift. Der Ansatz hatte jetzt einen Gehalt an Feststoffen, gerechnet als Oxide, von 133 g/l. Danach wurde abgenutscht und weiter analog Beispiel 6 verfahren. Die Ergebnisse sind in Tabelle 1 dargestellt. Das Produkt enthielt < 50 ppm Na.

Die Beispiele 4 bis 7 zeigen im Vergleich zu den Vergleichsbeispielen A und B, dass sich durch Fällungsreaktionen TiO₂-Produkte erzeugen lassen, die für die Verwendung als Hochtemperaturkatalysatoren geeignet sind und deren TiO₂-Anteil als reiner Anatas oder als Anatas-Rutil-Mischung eingestellt werden kann.

### Beispiel 8: Herstellung von Katalysatoren durch Hydrothermalbehandlung

Gewaschene Filterkuchen der Mischungen aus selbstgefertigten Vorformen von TiO₂ und Al₂O₃ bzw. SiO₂ entsprechend der Beispiele 5 und 6, jeweils in einer Menge entsprechend 100 g Feststoff, wurden mit je 800 ml vollentsalztem Wasser in einem 2 I-Stahlautoklaven bei 180 °C und 10 bar jeweils 2, 4 und 6 Stunden behandelt, dann abfiltriert, gewaschen und getrocknet. Die Untersuchung der Produkte zeigte, dass sich deren Eigenschaften von 2 nach 4 Stunden kaum und danach nicht mehr änderten. Die Ergebnisse nach 6 Stunden Hydrothermalbehandlung sind in Tabelle 2 dargestellt. Es ist ersichtlich, dass mit einer Hydrothermalbehandlung Katalysatoreigenschaften erreicht werden können, die nahe an denen der weiter oben beschriebenen geglühten Katalysatoren liegen. Dies bedeutet, dass gegebenenfalls auf die Glühung am Ende der Katalysatorherstellung verzichtet werden kann, und die Einstellung der Endeigenschaften des Katalysators in der Einfahrphase des Hochtemperaturkatalysators erfolgen kann.

### Beispiel 9: Herstellung von dotierten Katalysatoren durch Fällung von Mischungen aus Vorformen von TiO₂ und Al₂O₃ bzw. SiO₂ und anschließender Imprägnierung

Analog den Beispielen 5 und 6 wurden durch Fällung TiO₂-Al₂O₃-, bzw. TiO₂-SiO₂-Mischungen hergestellt. Nach der Fällung wurden in die gewaschenen, noch nassen Filterkuchen wässrige Lösungen von SnSO₄, Ce(SO₄)₂, MnSO₄, (NH₄)₂Fe(SO₄)₂ oder NiSO₄ in einer jeweiligen Menge entsprechend 0,5 mMol Metall pro g Feststoff in den jeweiligen Filterkuchen eingerührt.

Die Dotiermengen waren so berechnet, dass bei einer katalytisch aktiven Oberfläche von 100 m²/g Probe zu Beginn des letzten Stadiums der Glühung jeder m² Oberfläche mit 5 µmol Dotierelement belegt sein sollte; bei vollständiger Eindiffusion ergäbe sich eine Volumendotierung des TiO₂ von 12 bis 15 Mol-%.

Nach Trocknung wurde jeweils 4 Stunden bei 800 °C im Muffelofen geglüht. Die Ergebnisse sind zum Teil in Tabelle 3 dargestellt. Die spezifische Oberfläche wurde durch die Dotierung bei der TiO₂-Al₂O₃-Mischung nur wenig, bei der TiO₂-SiO₂-Mischung um bis zu ¼ erniedrigt. Das Porenvolumen, die Verteilung der spezifischen Oberfläche auf Meso- und Mikroporen und die Porendurchmesserverteilung wurden durch die Dotierung nicht beeinflusst. Eine Dotierung mit Sn-Verbindungen beförderte bei der Glühung hingegen erwartungsgemäß die Umwandlung der Anatasmodifikation in Rutil.

Aus Tabelle 3 ist weiter ersichtlich, dass die Temperaturstabilität der erfindungsgemäß hergestellten Produkte aus TiO₂ und Al₂O₃ bzw. SiO₂ hinsichtlich spezifischer Oberfläche und Anatasmodifikation durch die Dotierung nach dem einfachen Imprägnierverfahren nicht wesentlich beeinträchtigt wird.

### Vergleichsbeispiel C: Herstellung eines Katalysatorpulvers aus TiO₂, dotiert mit WO₃ (Stand der Technik)

In einem Rührbehälter mit Heizspirale wurde 1 I einer Suspension von 300 g/l einer nach dem Sulfatverfahren hergestellten, anschließend gewaschenen und gebleichten Metatitansäure in Wasser vorgelegt und unter Rühren auf 95 °C aufgeheizt. Innerhalb von 10 Minuten wurden 0,70 I einer Lösung von Ammoniummetawolframat (NH₄)₆H₂W₁₂O₄₀ mit einem Gehalt von 50 g/l zugegeben. Dann wurde 2 Stunden gekocht. Anschließend wurde die Suspension ohne vorherige Filterung bei 110 °C getrocknet und 2 h bei 600 °C geglüht. Das Material enthielt 9,3 % WO₃. Die weiteren Ergebnisse sind in Tabelle 4 dargestellt.

### Beispiel 10: Herstellung eines mit WO₃ dotierten Katalysatorpulvers durch Fällung einer Mischung von Vorformen von TiO₂, SiO₂ und WO₃

Wie in Beispiel 6 wurde eine Mischung von Vorformen von TiO₂ und SiO₂ ausgefällt. Nach der Reifephase und vor dem Abnutschen wurden 3,930 I einer Lösung von Na₂WO₄ 2 H₂O mit einem Gehalt von 165 g/l innerhalb von 1 h bei 90°C zugegeben. Dabei wurde der pH-Wert mittels 50 %-iger H₂SO₄ auf 2 gehalten; anschließend wurde 2 Stunden unter Rühren bei 90 °C gereift. Danach wurde die Suspension analog Beispiel 6 filtriert und gewaschen. Der gewaschene Filterkuchen wurde 4 Tage bei 50 °C vorgetrocknet und schließlich 8 Stunden bei 110 °C getrocknet. Abweichend zu Beispiel 6 wurde 2 Stunden bei 600 °C und anschließend 2,5 Stunden bei 700 bzw. 800 °C geglüht. Das erhaltene Katalysatormaterial bestand gemäß chemischer Analyse zu 32 % aus TiO₂, zu 58 % aus SiO₂ und zu 5,4 % aus WO₃, der Na-Gehalt betrug 0,33 %. Die weiteren Ergebnisse sind in Tab.4 dargestellt. Zu erkennen ist, dass die spezifische Oberfläche und Porosität bei 600 °C im Vergleich zu Vergleichsbeispiel C deutlich größer und auch noch über 750°C im Gegensatz zu Vergleichsbeispiel C stabil sind.

**Tabelle 1:**

| **Vergleich der Katalysatoren nach den Vergleichsbeispielen A und B und den erfindungsgemäßen Beispielen 1 bis 7** | | | | | | |
|---|---|---|---|---|---|---|
| Beispiel | Temperatur während 4-stündigem Glühen in °C | BET [m²/g] | Poren-volumen [cm³/g] | mittlerer Poren-durch-messer [nm] | % -Anteil Rutil des TiO₂ | Anatas: Scherrer-Kristallitgröße [nm] |
| **A**: TiO₂ ohne Träger | getrocknet vor Glühung | 299 | | | 0 | 7 |
| " | 750 | 28 | | | 0 | 33 |
| " | 800 | 17 | | | 0,9 | 44 |
| " | 850 | 9,5 | | | 1,4 | 62 |
| **B**: TiO₂ auf vorgefertigtem agglomeriertem Träger (Al₂O₃) | getrocknet vor Glühung | 174 | | | 0 | 8 |
| " | 750 | 66 | | | 0 | 23 |
| " | 800 | 59 | 0,23 | 15 - 20 | ca.1,5 | 26 |
| " | 850 | 55 | | | 21 | 29 |
| **1:** TiO₂ auf vorgefertigtem feindispersem Träger (Al₂O₃) | getrocknet vor Glühung | 121 | | | 0 | 12 |
| " | 750 | 49 | | | 0 | 18 |
| " | 800 | 45 | | | 0 | 20 |
| " | 850 | 42 | | | 0 | 22 |
| **2:** TiO₂ auf vorgefertigtem feindispersem SiO₂ | getrocknet vor Glühung | 119 | | | | |
| " | 750 | 42 | | | 3 | 30 |
| " | 800 | 40 | 0,34 | - | 3 | 32 |
| " | 850 | 40 | | | 3 | 34 |
| **3**: TiO₂ auf vorgefertigtem besonders feindispersem SiO₂ | getrocknet vor Glühung | 157 | | | | |
| " | 750 | 79 | | | 0 | 29 |
| " | 800 | 78 | | | 0 | 30 |
| " | 850 | 77 | | | 0 | 31 |
| **4:** TiO₂-Al₂O₃-Mischung aus Fällung von Vorformen | 800 | 69 - 72 | 0,16 - 0,24 | 4 - 12 | 0 - 1 | 22 - 27 |
| **5**: TiO₂-Al₂O₃-Mischung aus Fällung von Vorformen | 800 | 61 - 73 | 0,16 - 0,27 | 4 - 12 | 0 | 22 - 28 |
| " | nach weiteren 11 h bei 900 °C | 38 | | | 0 - 2 | |
| " | nach zusätzlichen 13 h bei 900°C | 31 | | 0,11 - 0,13 | 0-2 | |
| **6**: TiO₂-SiO₂-Mischung aus Fällung von Vorformen | 900 | 129 - 141 | 0,47 - 0,51 | 7 - 50 | 0 | 23 |
| " | nach weiteren 11 h bei 900 °C | 102 | | | 0 | |
| " | nach zusätzlichen 13 h bei 900 °C | 90 | | 0,23 - 0,29 | 0 | |
| **7**: TiO₂-SiO₂-Mischung aus Fällung von Vorformen | 900 | 174 - 180 | 0,40 - 0,46 | | 58 | 28 - 31 (Rutil: 72 - 75) |
| " | nach weiteren 11 h bei 800 °C | 175 | | | 61 | 36 (Rutil 82) |
| " | nach zusätzlichen 13 h bei 800 °C | 171 | 0,32 - 0,36 | | 63 | 33 (Rutil: 96) |

**Tabelle 2:**

| **Katalysatoren hergestellt durch Hydrothermalbehandlung gemäß Beispiel 8** | | | |
|---|---|---|---|
| | BET [m²/g] | % Anteil Rutil des TiO₂ | Anatas: Scherrer-Kristallitgröße [nm] |
| TiO₂-Al₂O₃-Mischung aus selbstgefertigten Vorformen analog Bespiel 5 | 115 | 0 | 14 |
| TiO₂-SiO₂-Mischung aus selbstgefertigten Vorformen analog Beispiel 6 | 186 | 0 | 8 |

**Tabelle 3:**

| **Durch Imprägnierung dotierte Katalysatoren gemäß Beispiel 9** | | |
|---|---|---|
| | % Anteil Rutil des TiO₂ | Anatas: Scherrer-Kristallitgröße [nm] |
| TiO₂-Al₂O₃-Mischung aus selbstgefertigten Vorformen analog Beispiel 5 | 0 | 22 |
| + SnSO₄ | 65 | 21 (Rutil 35) |
| + Ce(SO₄)₂ | 0 | 18 |
| + MnSO₄ | 3 | 37 |
| + (NH₄)₂Fe(SO₄)₂ | 3 | 30 |
| + NiSO₄ | 0 | 32 |
| TiO₂-SiO₂-Mischung aus selbstgefertigten Vorformen analog Beispiel 6 | 0 | 23 |
| + SnSO₄ | 68 | 14 (Rutil 9) |
| + Ce(SO)₄ | 0 | 19 |
| + MnSO₄ | 0 | 31 |
| + (NH₄)₂Fe(SO₄)₂ | 10 | 27 |
| + NiSO₄ | 0 | 24 |

**Tabelle 4:**

| **WO**_{**3**}**-dotierte Katalysatoren gemäß Vergleichsbeispiel C und dem erfindungsgemäßen Beispiel 10** | | | |
|---|---|---|---|
| Beispiel | Temperatur während 2-stündigem Glühen in °C | BET [m²/g] | Porenvolumen [cm³/g] |
| **C:** TiO₂ ohne Träger | 600 | 64 | 0,25 |
| " | nach weiteren 2,5 h bei 700 °C | 43 | 0,19 |
| " | alternativ nach weiteren 2,5 h bei 800 °C | 25 | 0,10 |
| **10**: TiO₂-SiO₂-Mischung aus Fällung von Vorformen analog Beispiel 6 | 600 | 167 | 0,79 |
| " | nach weiteren 2,5 h bei 700°C | 156 | 0,51 |
| " | alternativ nach weiteren 2,5 h bei 800 °C | 149 | 0,46 |

## Patentansprüche

1. Verfahren zur Herstellung eines hochtemperaturstabilen TiO₂-haltigen Katalysators oder Katalysatorträgers, **dadurch gekennzeichnet, dass**
eine wässrige, Ti-haltige Lösung mit einer Konzentration an gelöstem Ti von umgerechnet 10 bis 250 g TiO₂ pro Liter Lösung zu einer maximal 10 Gew.-%-igen Suspension eines feindispersen, anorganischen Trägermaterials in Wasser gegeben wird,
wobei das anorganische Trägermaterial eine spezifische Oberfläche nach BET von > 20 m²/g hat und eventuell vorhandene, aus den Primärteilchen gebildete Agglomerate eine Teilchengröße d₅₀ < 10 µm aufweisen,
wobei die Zugabegeschwindigkeit der Ti-haltigen Lösung zur Suspension so gewählt wird, dass eine Zugabe von umgerechnet 0,05 g TiO₂ pro m² Trägeroberfläche und Stunde nicht überschritten wird,
das TiO₂ als Titanoxidhydrat auf den anorganischen Träger aufgefällt wird, und das erhaltene Produkt filtriert, gewaschen und geglüht wird.

2. Verfahren nach Anspruch 1, **dadurch gekennzeichnet, dass** eventuell vorhandene Agglomerate des anorganischen Trägermaterials eine Teilchengröße d₅₀ < 5 µm aufweisen.

3. Verfahren nach Anspruch 1 oder 2, **dadurch gekennzeichnet, dass** je nach eingesetztem Trägermaterial dieses anstatt in Wasser in verdünnten oder konzentrierten Säuren oder Laugen suspendiert wird.

4. Verfahren nach einem der Ansprüche 1 bis 3, **dadurch gekennzeichnet, dass** anstelle der Glühung das mit TiO₂ versehene Trägermaterial nach der Filtration und Waschung zusammen mit Wasser in einen Druckbehälter (Autoklav) gegeben wird und über einen Zeitraum von einer Stunde bis 5 Tagen bei Temperaturen > 100 °C gehalten wird.

5. Verfahren nach einem der Ansprüche 1 bis 3, **dadurch gekennzeichnet, dass** anstelle der Glühung das mit TiO₂ versehene Trägermaterial nach der Fällung zusammen mit Wasser in einen Druckbehälter (Autoklav) gegeben wird, über einen Zeitraum von einer Stunde bis 5 Tagen bei Temperaturen > 100 °C gehalten wird und anschließend filtriert und gewaschen wird.

6. Verfahren nach einem der Ansprüche 1 bis 5, **dadurch gekennzeichnet, dass** als wässrige, Ti-haltige Lösung eine Titanylsulfatösung oder Titansulfatlösung eingesetzt wird.

7. Verfahren nach einem der Ansprüche 1 bis 6, **dadurch gekennzeichnet, dass** die Konzentration der Ti-haltigen Lösung an gelöstem Ti umgerechnet 10 bis 200 g TiO₂ pro Liter Lösung beträgt

8. Verfahren nach Anspruch 7, **dadurch gekennzeichnet, dass** die Konzentration der Ti-haltigen Lösung an gelöstem Ti umgerechnet 50 bis 180 g TiO₂ pro Liter Lösung beträgt.

9. Verfahren nach einem der Ansprüche 1 bis 8, **dadurch gekennzeichnet, dass** die Konzentration der Suspension des feindispersen Trägermaterials 0,2 bis 8 Gew.-% beträgt.

10. Verfahren nach Anspruch 9, **dadurch gekennzeichnet, dass** die Konzentration der Suspension des feindispersen Trägermaterials 0,5 bis 5 Gew.-% beträgt.

11. Verfahren zur Herstellung eines hochtemperaturstabilen TiO₂-haltigen Katalysators oder Katalysatorträgers, **dadurch gekennzeichnet, dass** aus wässriger Lösung
1. hydratisierte Vorformen eines oder mehrerer Metalloxide oder Halbmetalloxide, und 2. Titanoxidhydrat ausgefällt werden,
wobei pro Liter Suspension und Stunde mindestens 30 g Feststoff, gerechnet als Oxid (ohne Hydratwasser), ausgefällt werden, und
das erhaltene Fällungsgemisch filtriert, gewaschen und geglüht wird.

12. Verfahren nach Anspruch 11, **dadurch gekennzeichnet, dass** anstelle der Glühung das erhaltene Fällungsgemisch (Vorformen von TiO₂ und Metalloxiden, bzw. Halbmetalloxiden) nach der Filtration und Waschung zusammen mit Wasser in einen Druckbehälter (Autoklav) gegeben wird und über einen Zeitraum von einer Stunde bis 5 Tagen bei Temperaturen > 100 °C gehalten wird.

13. Verfahren nach Anspruch 11, **dadurch gekennzeichnet, dass** anstelle der Glühung das erhaltene Fällungsgemisch (Vorformen von TiO₂ und Metalloxiden, bzw. Halbmetalloxiden) zusammen mit Wasser in einen Druckbehälter (Autoklav) gegeben wird und über einen Zeitraum von einer Stunde bis 5 Tagen bei Temperaturen > 100 °C gehalten wird und anschließend filtriert und gewaschen wird.

14. Verfahren nach einem der Ansprüche 11 bis 13, **dadurch gekennzeichnet, dass** das Molverhältnis von Metall, bzw. Halbmetall zu Titan größer als 0,15 ist.

15. Verfahren nach einem der Ansprüche 1 bis 14, **dadurch gekennzeichnet, dass** das TiO₂-haltige Katalysatormaterial dotiert wird mit weiteren Metalloxiden, wobei der Gehalt des Dotiermetalloxides maximal 25 Gew.-%, beträgt, bezogen auf das fertige Katalysatormaterial, bzw. Katalysatorträgermaterial.

16. Verfahren nach Anspruch 15, **dadurch gekennzeichnet, dass** als Dotiermetalloxid SnO₂, CeO₂, VOₓ, CrOₓ, MoOₓ, WOₓ, MnOₓ, FeOₓ oder NiO eingesetzt wird.

17. Verwendung des nach einem Verfahren der Ansprüche 1 bis 16 hergestellten Katalysators oder Katalysatorträgers in der Abgaskatalyse.

18. Verwendung des nach einem Verfahren der Ansprüche 1 bis 16 hergestellten Katalysators oder Katalysatorträgers in chemischen Katalyseverfahren, in der petrochemischen Industrie und in der organischen Grundstoffsynthese.
